# EUROPEAN PATENT SPECIFICATION

(11) **EP 3 300 630 B1**
(45) Date of publication and mention of the grant of the patent: **10.04.2019**
(21) Application number: 17203007.4
(22) Date of filing: 09.11.2015
(51) Int. Cl.: A47B 96/20, B32B 15/00, E06B 3/00, F16B 12/06, F16B 12/46, F16B 5/01

(54) **METHOD FOR JOINING PANELS, IN PARTICULAR FOR FURNITURE OR TROLLEYS**
VERFAHREN ZUR VERBINDUNG VON PLATTEN, INSBESONDERE FÜR MÖBEL ODER WAGEN
PROCÉDÉ DE JONCTION DE PANNEAUX, NOTAMMENT POUR DES MEUBLES OU DES CHARIOTS

(30) Priority: 11.11.2014 IT PN20140060; 21.07.2015 IT UB20152362
(43) Date of publication of application: 04.04.2018
(62) Divisional of application: 15802201.2
(73) Proprietor: I.L.V.E. S.p.A. Industria Lavorazione Veneta Elettrodomestici SpA, 35011 Campodarsego (PD) (IT)
(72) Inventor: AMBROSI, Marco, 35011 Campodarsego (PD) (IT); AMBROSI, Franco, 35011 Campodarsego (PD) (IT); GAIARIN, Franco, 35011 Campodarsego (PD) (IT); ILLOTTI, Carlo, 35011 Campodarsego (PD) (IT)
(74) Representative: Gonella, Mario

(56) References cited:
- DE-U1-202009 017 363
- US-A- 2 911 274
- US-A- 4 370 372
- US-A- 4 712 957

## Description

### TECHNICAL FIELD OF THE INVENTION

The present invention refers to a method for joining panels, particularly designed to be used in pieces of furniture, in the home or professional catering field, in the health and hospital fields, as well as in the furnishing of ships and means of transportation, such as recreational vehicles and travel trailers, permanently furnished so as to provide to the needs of their occupants. The invention can also be applied to holding trolleys used in the above fields, for example for carrying food, beverages, medical articles or medicines.

### PRIOR ART

The use of multilayer panels to form the structure of furniture pieces or containers is well known in the production of furniture or container elements in general.

GB 2480230 discloses an example of construction of a panel consisting of a flat core of alveolar material made of polymeric material to which are associated external "skins" of a material, for example metal of plastic, chosen on the basis of the intended final use of the panel. Between the external "skins" and the alveolar core can be provided an intermediate layer formed by a porous membrane.

US 3,676,279 describes a multilayer structure for a worktop for office furniture pieces, such as desks or tables, comprising a lower plate of painted steel provided with raised edges bent so as to form flanges, a cellular core glued to the lower plate having a perimetric dimension smaller than the plate so as to leave a space between the edge of the core and the raised edge of the plate, an upper plate also made of painted steel and glued to the core, and finishing sheets of melamine laminate glued to the upper plate and to the sides defined by the raised edges of the lower plate.

In the professional field, as for example in large-scale catering, or in health, hospital or welfare services, there is a steadily increasing use of furniture or trolleys with metal panels or doors, mainly stainless steel; the metal structure, which by nature is not porous or absorbent, lends to the furniture piece or trolley characteristics of high mechanical strength and flame resistance, easy cleaning, water repellence, and especially the capacity of being exempt from attack from corrosive or biologically infective substances.

The tendency to use metal components on furniture articles or trolleys is also increasing in the domestic field, due both to the above intrinsic characteristics of the material and to reasons of fashion and design.

One drawback in the use of existing solutions, such as those described in the above-mentioned documents, stems mainly from the high weight of the metal panel, which does not allow the use of standard components and accessories, such as hinges, guides, lifting arms, etc., that are normally used in the home furniture industry; such components and accessories are in fact dimensioned for coupling and/or supporting panels or doors that are much lighter, being generally made of wood or laminate.

### SUMMARY OF THE INVENTION

The main objective of the present invention is to devise a method for joining panels, particularly for furniture pieces or trolleys, capable of overcoming the shortcomings of the state of the art mentioned above.

In the scope of the above objective, one purpose of the present invention is to make a panel that includes one or more metal elements that is easy to carry and assemble, both with other panels of conventional type and with panels made with the method of the present invention, for the purpose of easily assembling the furniture piece or the trolley, even at the chosen place of destination.

Yet another purpose is to offer a panel provided with methods of assembly to compose furniture or finished trolleys substantially identical to those already existing in the home field, such as to also allow, in addition to the use of standard components and accessories, the total interchangeability with conventional panels, doors or drawers already existing in the home furnishings field.

One not minor purpose is to devise a method for joining panels, in particular for furniture pieces or trolleys, that achieves the above objective and purposes at competitive costs and that can be carried out with conventional known machinery and equipment.

The above objective and purposes, and others that will be more evident below, are achieved through a method for joining said panels as defined in the independent claim 1.

### BRIEF DESCRIPTION OF THE DRAWINGS

Further characteristics and advantages of a method for joining panels, in particular for furniture pieces or trolleys, according to the present invention will become more evident from the following description of a particular, but not exclusive, embodiment illustrated purely by way of a non-limiting example with reference to the enclosed figures, wherein:
- figures 1 and 2 schematically illustrate, in an exploded view and an assembly view respectively, an embodiment of a joining method according to the present invention, in particular for panels to be coupled to form the base and sides or back of a piece of furniture or a trolley;
- figures 3 and 4 illustrate, in views similar to the preceding ones, the joining method applied to panels to be coupled to form the base and the sides or back of a wall unit;
- figures 5 and 6 illustrate, in views similar to the preceding ones, the joining method applied to panels to be coupled to form the top and the sides or back of a wall unit;
- figures 7 and 8 show a cross section of the panels before and after they are joined to each other.

### DETAILED DESCRIPTION OF THE INVENTION

The purpose of the method is to obtain a first panel, making up for example a side or the back of a furniture piece or a trolley, provided with a plurality of pins, preferably made of steel, arranged perpendicularly to the panel and having at least one threaded portion; the pins are arc-welded to the panel by means of a capacitor discharge spot welder or equivalent methods and/or equipment. The method also entails the production of a second panel, forming for example the base or the top of the furniture or of the container, provided with a plurality of holes drilled in positions corresponding to the pins on the first panel.

The first panel is then joined orthogonally to the second panel by means of a suitable clamp, generally employed in coupling conventional panels in the construction of pieces of furniture. Before joining the second panel with the first panel, the holes of the second panel are filled with special glues, preferably of polypropylenic type for hot or cold application having characteristics of resistance to changes in temperature and substantially free of harmful emissions or migrations of any type, in particular if the panel is to be used for furniture or trolleys in the health or hospital fields.

The insertion of the threaded pins of the first panel into the glue-filled holes of the second panel guarantees a permanent and dependable fastening, since the gripping force between the two panels is provided by the engagement of the threaded portion of the pins and the glue that penetrated and subsequently hardened between the threads and the inside of the holes.

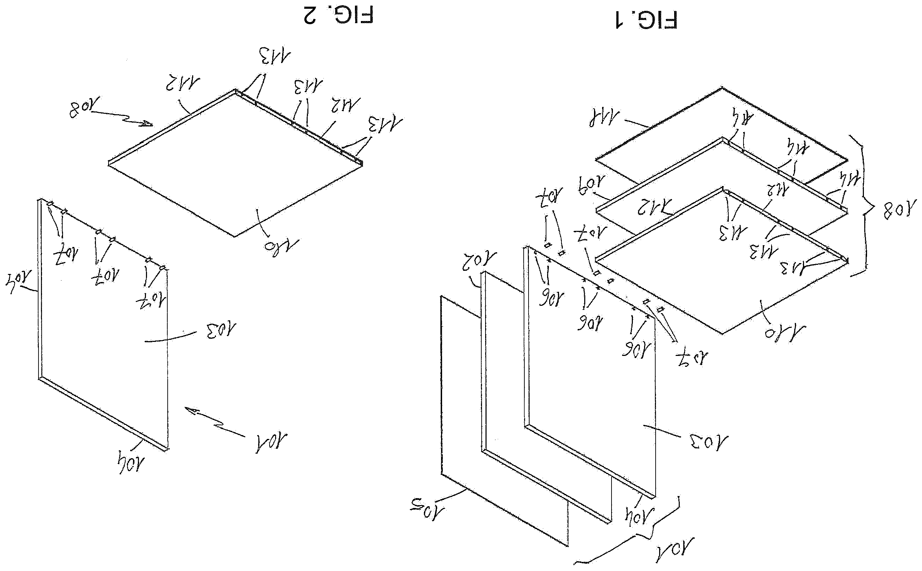

Referring to the enclosed figures 1 and 2, a first panel 101, in particular for the sides or backs of furniture pieces or holding trolleys, includes at least one portion of alveolar material 102 or other suitable lightweight material such as, for example, a foamed plastic material, to which are coupled, from opposite sides, a metallic half-shell 103 and a closing sheet 105.

Similarly, a second panel 108, couplable to the first panel 101 and forming the base of a furniture piece or a trolley, includes at least one second portion of alveolar material 109 to which are coupled, from opposite sides, a second metallic half-shell 110 and a second closing sheet 111.

According to a preferred embodiment, the alveolar material consists for example of a layer of alveolar polypropylene commercially known by the name LITEXTM marketed by the ForliteTM firm.

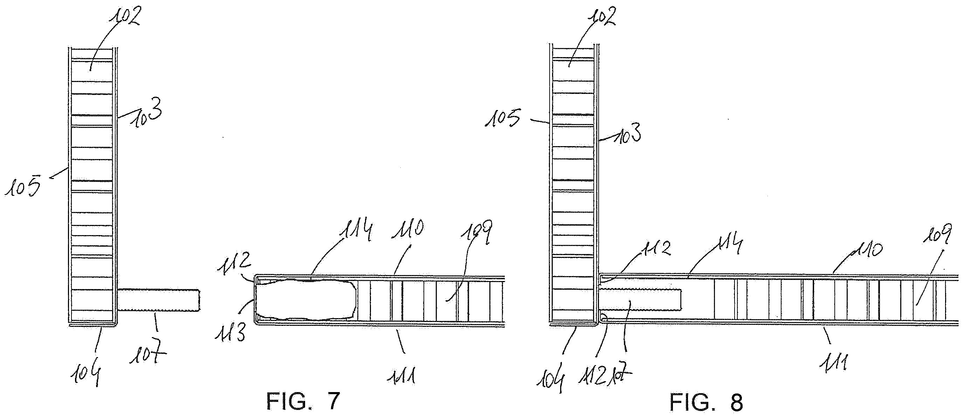

The method according to a preferred embodiment of the present invention comprises essentially the following steps:
a) construction of the first panel 101 by shaping a first flat metal plate, preferably stainless steel, by bending one or more peripheral edges so as to obtain a metallic half-shell 103 provided with two or more raised edges 104; the half-shell 103 thus obtained has a surface extension essentially equal to the extension of the portion of alveolar material 102;
b) drilling of the first flat metal plate before bending, or drilling of the half-shell 103, if drilling is carried out after bending, to obtain prearranged first holes 106 for the subsequent fastening of the threaded pins; the sequence of the bending and drilling steps is irrelevant with regards to the method, since they are independent of each other; however, it would be preferable to first carry out the drilling and then the bending step to operate with the punch or other tool on a flat plate instead of drilling holes on different planes as would be the case if working on the half-shell;
c) coupling of a closing sheet 105 on one face of the portion of alveolar material 102; the closing sheet may be formed, for example, by a further metal plate, or by a sheet of laminate, wood or other suitable material;
d) insertion and coupling of the sub-assembly formed by the portion of alveolar material 102 and by the closing sheet 105 inside the surface of the half-shell 103 defined by the raised edges 104, so that said sub-assembly is encased between and in contact with at least two raised edges 104;
e) fastening, by arc welding or equivalent processes, of the threaded pins 107 inside the first holes 106 and final attainment of the first panel 101;
f) production of the second panel 108 by bending two or more peripheral edges of a second flat metal plate, preferably of stainless steel, so as to obtain a second metallic half-shell 110 provided with two or more raised edges 112 and having a surface extension essentially equal to the extension of the portion of alveolar material 109;
g) drilling of the second metallic flat plate before bending, or of the half-shell 110 after bending, as already described for the first plate at point (b), to obtain prearranged second holes 113;
h) coupling of a second closing sheet 111 on one face of the second portion of alveolar material 109;
i) inserting and coupling the sub-assembly formed by the second portion of alveolar material 109 and by the second closing sheet 111 inside the surface of the second half-shell 110 defined by the raised edges 112, so as to obtain the second panel 108 in which said sub-assembly is encased between and in contact with at least two raised edges 112;
j) drilling the edge of the second portion of alveolar material 109 in positions corresponding to the second holes 113 previously drilled on the raised edges 112 of the second half-shell 110 so as to obtain cavities 114; the drilling of the alveolar material involves the collapsing of the alveolar structure surrounding the hole, that is, the crushing of the alveoli adjacent to the drilling zone. In figures from 1 to 6, the cavities 114 are shown for clarity as made before the completion of the second panel 108, but it remains understood that such cavities are made after the completion of the second panel 108;
k) filling of the cavities 14 with a suitable glue, which also fills the alveoli that were crushed during the previous drilling, and thus are no longer closed cells (fig. 7);
l) joining of the first panel 101 to the second panel 108 by inserting the threaded pins 107 inside the cavities 114 in positions corresponding to the second holes 113 (fig. 8);
m) permanently fixing the connection of the first panel 101 to the second panel 108, preferably through the cold-setting of the glue and gripping of the same inside the cavity 114 in position corresponding to the threads on the threaded pins 107 and to the portions of alveolar structure no longer with closed cells surrounding the cavity 114. In this manner, the solidification of the glue inside the cavity 114 re-establishes a strong structure on the edges of the alveolar material, which guarantees the solid and permanent bonding of the two panels.

The joining of the different components of the first panel 101 and of the second panel 108, can be achieved, as already widely used in the home furniture field, by means of gluing on a press or a clamp; advantageously, the glues used can be of polypropylenic type for cold or hot application with characteristics of resistance to temperature changes and substantially free of harmful emissions, in particular if the panel is used for furniture pieces or trolleys intended to be used in health or hospital facilities.

Further, as already mentioned above, the joining of the first panel 101 to the second panel 108 can also be carried out in a clamp.

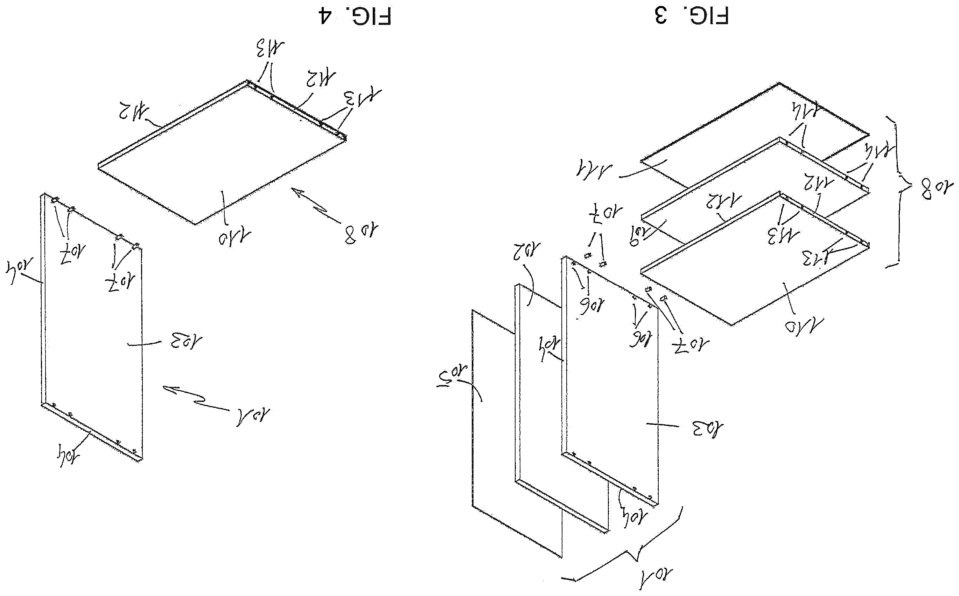

Figures 3 and 4 illustrate the construction, with the same method described above, of a first panel 101 forming a side or the back of a wall unit couplable to a second panel 108 forming the base of the wall unit.

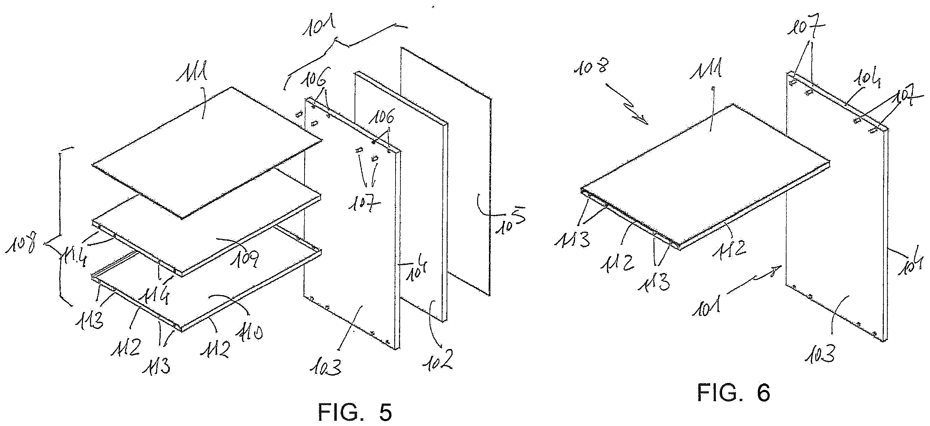

Figures 5 and 6 illustrate the construction, with the same method described above, of a first panel 101, forming a side or the back of a furniture piece or of a wall unit or a holding trolley, couplable to a second panel 108 forming the top of the furniture piece or of the wall unit or of the holding trolley.

Figures 7 and 8 show, respectively, according to a cross section along a plane of the panels 101 and 108 comprising the threaded pins 107 and the holes 113, the step preceding the joining, in which the cavity 114 was filled with glue, and the step following the joining, in which the pin 107 was inserted into the cavity 114 and the glue re-establishes the portions of alveolar structure crushed during drilling.

The method of joining two panels as described above is considerably simplified, guaranteeing a permanent and dependable connection without requiring the use of screws or bolts, which could be difficult to access inside the furniture piece.

Further, also from the aesthetic point of view, the connection of the panels according to the method described above is visually appealing, making it possible to have the external surfaces of the panels clean and free of holes or closing plugs.

Naturally, the present invention is amenable to numerous applications, modifications and variants without departing from the scope of patent protection as defined by the independent claim 1. Moreover, the materials and equipment used for implementing the present invention, as well as the shapes and dimensions of the individual components, can be the most suitable to meet the specific requirements.

## Claims

1. Method of joining panels, in particular for pieces of furniture or holding trolleys, comprising at least one portion of lightweight material (102, 109) and at least one metallic half-shell (103, 110), **characterized by**:
making of a first panel (101) provided with a plurality of pins (107) arranged perpendicularly to said first panel (101) and having at least one threaded portion;
making a second panel (108) provided with a plurality of cavities (114) obtained, in use, in positions corresponding to said plurality of pins (107);
filling said plurality of cavities (114) with a suitable glue;
joining said first panel (101) to said second panel (108) at orthogonal planes by inserting said pins (107) into said cavities (114);
permanently fastening said first panel (101) to said second panel (108) through the solidification and gripping of said glue on the threaded portion of said plurality of pins (107) and on the portions surrounding said cavity (114).

2. Method of joining panels as in claim 1, wherein said lightweight material is a material having an alveolar structure.

3. Method of joining panels as in claim 2, comprising the steps of:
shaping a first flat metallic plate by bending two or more peripheral edges to obtain a first metallic half-shell (103) provided with two or more raised edges (104);
before or after said step of shaping said first flat metallic plate, drilling said first plate or said first metallic half-shell (103) to obtain prearranged first holes (106);
coupling a first closing sheet (105) to a face of a first portion of alveolar material (102);
inserting and coupling the sub-assembly formed by said first portion of lightweight material (102) and by said first closing sheet (105) inside the surface of said first half-shell (103) so that said sub-assembly is encased in and in contact with at least two of said raised edges (104);
fastening said pins (107) having at least a threaded portion inside said first holes (106) to obtain said first panel (101);
shaping a second flat metal plate by bending two or more peripheral edges to obtain a second metallic half-shell (110) provided with two or more raised edges (112);
before or after said step of shaping said second flat metal plate, drilling said second plate or said second metallic half-shell (110) to obtain prearranged second holes (113);
coupling a second closing sheet (111) on one face of a second portion of alveolar material (109);
inserting and coupling the sub-assembly formed by said second portion of alveolar material (109) and by said second closing sheet (111) inside the surface of said second half-shell (110) so that said sub-assembly is encased between and in contact with at least two of said raised edges (112);
drilling the edge of said second portion of alveolar material (109) in positions corresponding to said second holes (113) so as to obtain said cavities (114);
filling said cavities (114) and the portions surrounding said cavities (114) with a suitable glue;
joining at planes perpendicular to each other said first panel (101) and said second panel (108) by inserting said threaded pins (107) inside said cavities (114) in positions corresponding to said second holes (113);
permanently fixing the joining of said first panel (101) to said second panel (108), through the solidification and gripping of said glue inside said cavities (114) in positions corresponding to the threads of said threaded pins (107) and of the portions surrounding said cavities (114).

## Patentansprüche

1. Verfahren zum Verbinden von Platten, insbesondere für Möbelteile oder Haltewagen, die wenigstens ein Teil aus leichtem Material (102, 109) und wenigstens eine metallische Halbschale (103, 110) umfassen, **gekennzeichnet durch**:
Herstellen einer ersten Platte (101), die mit einer Vielzahl von Stiften (107) bereitgestellt wird, die rechtwinklig zu der ersten Platte (101) angeordnet sind und wenigstens ein Gewindeteil haben;
Herstellen einer zweiten Platte (108), die mit einer Vielzahl von Hohlräumen (114) bereitgestellt wird, die im Einsatz in Positionen entsprechend der Vielzahl von Stiften (107) gewonnen werden;
Füllen der Vielzahl von Hohlräumen (114) mit einem geeigneten Klebstoff;
Verbinden der ersten Platte (101) mit der zweiten Platte (108) in orthogonalen Ebenen durch Einsetzen der Stifte (107) in die Hohlräume (114);
dauerhaftes Befestigen der ersten Platte (101) an der zweiten Platte (108) durch das Verfestigen und Greifen des Klebstoffs an dem Gewindeteil der Vielzahl von Stiften (107) und an den Teilen, die den Hohlraum (114) umgeben.

2. Verfahren zum Verbinden von Platten nach Anspruch 1, wobei das leichte Material ein Material mit einer alveolären Struktur ist.

3. Verfahren zum Verbinden von Platten nach Anspruch 2, das die Schritte umfasst:
Formen einer ersten flachen Metallplatte durch Biegen von zwei oder mehr Umfangskanten, um eine erste metallische Halbschale (103) zu erhalten, die mit zwei oder mehr erhöhten Kanten (104) bereitgestellt wird;
vor oder nach dem Schritt zum Formen der ersten flachen Metallplatte Bohren der ersten Platte oder der ersten metallischen Halbschale (103), um vorbereitete erste Löcher (106) zu erhalten;
Koppeln eines ersten Verschlussblechs (105) mit einer Fläche eines ersten Teils aus alveolärem Material (102);
Einsetzen und Koppeln der Teilbaugruppe, die durch das erste Teil aus leichtem Material (102) und durch das erste Verschlussblech (105) innerhalb der Oberfläche der ersten Halbschale (103) gebildet wird, so dass die Teilbaugruppe in und in Kontakt mit wenigstens zwei der erhöhten Kanten (104) eingeschlossen ist;
Befestigen der Stifte (107) mit wenigstens einem Gewindeteil innerhalb der ersten Löcher (106), um die erste Platte (101) zu erhalten;
Formen einer zweiten flachen Metallplatte durch Biegen von zwei oder mehr Umfangskanten, um eine zweite metallische Halbschale (110) zu erhalten, die mit zwei oder mehr erhöhten Kanten (112) bereitgestellt wird;
vor oder nach dem Schritt zum Formen der zweiten flachen Metallplatte Bohren der zweiten Platte oder der zweiten metallischen Halbschale (110), um vorbereitete zweite Löcher (113) zu erhalten;
Koppeln eines zweiten Verschlussblechs (111) an einer Fläche eines zweiten Teils aus alveolärem Material (109);
Einsetzen und Koppeln der Teilbaugruppe, die durch den zweiten Teil des alveolären Materials (109) und durch das zweite Verschlussblech (111) innerhalb der Oberfläche der zweiten Halbschale (110) gebildet wird, so dass die Teilbaugruppe in und in Kontakt mit wenigstens zwei der erhöhten Kanten (112) eingeschlossen ist;
Bohren der Kante des zweiten Teils aus alveolärem Material (109) in Positionen entsprechend den zweiten Löchern (113), um die Hohlräume (114) zu erhalten;
Füllen der Hohlräume (114) und der die Hohlräume (114) umgebenden Teile mit einem geeigneten Klebstoff;
Verbinden der ersten Platte (101) und der zweiten Platte (101) in Ebenen rechtwinklig zueinander, indem die Gewindestifte (107) innerhalb der Hohlräume (114) in Positionen entsprechend den zweiten Löchern (113) eingesetzt werden;
dauerhaftes Fixieren der Verbindung der ersten Platte (101) mit der zweiten Platte (108) durch das Verfestigen und Greifen des Klebstoffs innerhalb der Hohlräume (114) in Positionen entsprechend den Gewindegängen der Gewindestifte (107) und den die Hohlräume (114) umgebenden Teilen.

## Revendications

1. Procédé de jonction de panneaux, en particulier pour des meubles ou des chariots de maintien, comprenant au moins une partie en matériau léger (102, 109) et au moins une demi-coque métallique (103, 110), **caractérisé par** :
la fabrication d'un premier panneau (101) pourvu d'une pluralité de broches (107) agencées perpendiculairement audit premier panneau (101) et ayant au moins une partie filetée ;
la fabrication d'un deuxième panneau (108) pourvu d'une pluralité de cavités (114) obtenues, en utilisation, dans des positions correspondant à ladite pluralité de broches (107) ;
le remplissage de ladite pluralité de cavités (114) avec une colle appropriée ;
la jonction dudit premier panneau (101) audit deuxième panneau (108) au niveau de plans orthogonaux en insérant lesdites broches (107) dans lesdites cavités (114) ;
la fixation permanente dudit premier panneau (101) audit deuxième panneau (108) par la solidification et la prise de ladite colle sur la partie filetée de ladite pluralité de broches (107) et sur les parties entourant ladite cavité (114).

2. Procédé de jonction de panneaux selon la revendication 1, dans lequel ledit matériau léger est un matériau ayant une structure alvéolaire.

3. Procédé de jonction de panneaux selon la revendication 2, comprenant les étapes consistant à :
la déformation d'une première plaque métallique plate en pliant deux ou plusieurs bords périphériques pour obtenir une première demi-coque (103) métallique munie de deux ou plus de bords surélevés (104) ;
avant ou après ladite étape de déformation de ladite première plaque métallique plate, le perçage de ladite première plaque ou ladite première demi-coque (103) métallique pour obtenir des premiers trous (106) pré-formés ;
le couplage d'une première feuille de fermeture (105) à une face d'une première partie de matériau alvéolaire (102) ;
l'insertion et le couplage du sous-ensemble formé par ladite première partie de matériau léger (102) et par ladite première feuille de fermeture (105) à l'intérieur de la surface de ladite première demi-coque (103) de sorte que ledit sous-ensemble soit enfermé dans et en contact avec au moins deux desdits bords relevés (104) ;
la fixation desdites broches (107) ayant au moins une partie filetée à l'intérieur desdits premiers trous (106) pour obtenir ledit premier panneau (101) ;
la déformation d'une deuxième plaque métallique plate en pliant deux ou plusieurs bords périphériques pour obtenir une deuxième demi-coque (110) métallique munie de deux ou plus de bords surélevés (112) ;
avant ou après ladite étape de déformation de ladite deuxième plaque métallique plate, le perçage de ladite deuxième plaque ou ladite deuxième demi-coque (110) métallique pour obtenir des deuxièmes trous (113) pré-formés ;
le couplage d'une deuxième feuille de fermeture (111) sur une face d'une deuxième partie de matériau alvéolaire (109) ;
l'insertion et le couplage du sous-ensemble formé de ladite deuxième partie de matériau alvéolaire (109) et de ladite deuxième feuille de fermeture (111) à l'intérieur de la surface de ladite deuxième demi-coque (110) de sorte que ledit sous-ensemble soit enfermé entre et en contact avec au moins deux desdits bords relevés (112) ;
le perçage du bord de ladite deuxième partie de matériau alvéolaire (109) dans des positions correspondant auxdits seconds trous (113) de manière à obtenir lesdites cavités (114) ;
le remplissage desdites cavités (114) et des parties entourant lesdites cavités (114) avec une colle appropriée ;
la jonction l'un à l'autre du premier panneau (101) et du second panneau (108) au niveau de plans perpendiculaires en insérant lesdites broches filetées (107) à l'intérieur desdites cavités (114) dans des positions correspondantes auxdits seconds trous (113) ;
la fixation permanente de la jonction dudit premier panneau (101) audit deuxième panneau (108), par solidification et la prise de ladite colle à l'intérieur desdites cavités (114) dans des positions correspondant aux filets desdites broches filetées (107) et des parties entourant lesdites cavités (114).
